# EUROPEAN PATENT APPLICATION

(11) **EP 4 772 917 A1**
(43) Date of publication of application: **08.07.2026**
(21) Application number: 24859188.5
(22) Date of filing: 11.07.2024
(51) Int. Cl.: G02B 6/36, B08B 1/36

(54) **OPTICAL CONNECTOR CLEANING TOOL**

(30) Priority: 01.09.2023 JP 2023142518
(71) Applicant: Fujikura Ltd., Tokyo 135-8512 (JP)
(72) Inventor: WATANABE, Junya, Sakura-shi, Chiba 285-8550 (JP)
(74) Representative: Ter Meer Steinmeister & Partner
(86) International application number: PCT/JP2024/025186
(87) International publication number: WO 2025/047144

(57) **Abstract**

An optical connector cleaning tool 1 includes: a cleaning shaft 20 that has a pressing surface 211 pressing a cleaning element 5 against a connection end surface 111 of an optical connector 100; a housing 60 that holds the cleaning shaft 20 relatively movable along an axis direction of the cleaning shaft 20; a feeding bobbin 33 that is housed in the housing 60 and feeds the cleaning element 5 to the pressing surface 211; a winding bobbin 31 that is housed in the housing 60 and collects the cleaning element 5 from the pressing surface 211; and a locking mechanism 94 that locks the feeding bobbin 33 when a relative position of the cleaning shaft 20 with respect to the housing 60 is displaced toward +Y-direction and unlocks the feeding bobbin 33 when the relative position of the cleaning shaft 20 with respect to the housing 60 is displaced toward -Y-direction.

## Description

### Technical Field

The present invention relates to an optical connector cleaning tool that cleans a connection end surface of an optical connector.

In designated states where incorporation of documents by reference is accepted, the contents described in Japanese Patent Application No. 2023-142518 filed on September 1, 2023 in Japan are incorporated by reference into this specification and regarded as a part of the description of this specification.

### Background Art

The optical connector cleaning tool includes a feed mechanism that interlocks with a movement of a moving member to draw a fixed amount of a cleaning medium from a feeding bobbin, and a winding mechanism that winds the cleaning medium onto a winding bobbin, is known (see, for example, Patent Document 1). The above-described winding mechanism includes a slip mechanism that causes a drive piece to slip with respect to a rotating body when the load of the drive piece that pushes an engagement projection of the rotating body of the winding bobbin reaches a predetermined load.

### Prior Art Document

### Patent Document

Patent Document 1: WO 2020/170539

### Summary of Invention

### Problems to be Solved by Invention

As the number of cleaning operations increases, the amount of cleaning medium wound around the winding bobbin increases, so a radius of the cleaning medium becomes larger, and an amount of cleaning medium wound per operation of the winding mechanism increases. In contrast, the above slip mechanism prevents the winding bobbin, having wound a fixed amount of the cleaning medium, from winding more of the cleaning medium, but the fine adjustment of the slip mechanism is difficult. Therefore, as the number of cleanings increases, there is a problem that equal to or more than a fixed amount is wound around the winding bobbin and the number of times in which the optical connector can be cleaned is limited.

The problem to be solved by the invention is to provide an optical connector cleaning tool capable of increasing the number of cleanable times.

### Means for Solving Problems

[1] Aspect 1 of the present invention is an optical connector cleaning tool that cleans a connection end surface of an optical connector, comprising: a cleaning shaft that comprises a pressing surface pressing a cleaning element against the connection end surface and in which the cleaning element is wound on the pressing surface; a housing that holds the cleaning shaft relatively movable along an axis direction of the cleaning shaft; a first bobbin that is housed in the housing and feeds the cleaning element to the pressing surface; a second bobbin that is housed in the housing and collects the cleaning element from the pressing surface; and a locking mechanism that locks the first bobbin when a relative position of the cleaning shaft with respect to the housing is displaced toward a first direction and unlocks the first bobbin when the relative position of the cleaning shaft with respect to the housing is displaced toward a second direction opposite to the first direction.
[2] Aspect 2 of the present invention may be the optical connector cleaning tool of Aspect 1, wherein the optical connector cleaning tool may comprise: a feed mechanism that feeds the cleaning element from the first bobbin to the pressing surface in accordance with the relative movement of the cleaning shaft with respect to the housing toward the second direction; and a collection mechanism that rotates the second bobbin to collect the cleaning element from the pressing surface in accordance with the relative movement of the cleaning shaft with respect to the housing toward the first direction.
[3] Aspect 3 of the present invention may be the optical connector cleaning tool of Aspect 1 or 2, wherein the optical connector cleaning tool may comprise a rotation restriction mechanism that restricts rotation of the second bobbin when a tension equal to or more than a predetermined value is applied to the second bobbin via the cleaning element.
[4] Aspect 4 of the present invention may be the optical connector cleaning tool of any one of Aspects 1 to 3, wherein the locking mechanism may comprise: a first engagement part capable of moving toward and away from the first bobbin; a second engagement part included in the first bobbin, the first engagement part capable of being engaged with the second engagement part; and a guide member that is relatively movable with respect to the first engagement part in accordance with the relative position of the cleaning shaft with respect to the housing, when the relative position of the cleaning shaft with respect to the housing is displaced toward the first direction, the first engagement part may be engaged with the second engagement part, and when the relative position of the cleaning shaft with respect to the housing is displaced toward the second direction, the first engagement part may move away from the first bobbin while the first engagement part may be guided by the guide member.
[5] Aspect 5 of the present invention may be the optical connector cleaning tool of Aspect 2, wherein the cleaning shaft may have a passageway through which the cleaning element to be collected from the pressing surface to the second bobbin passes, and the feed mechanism may comprise: a first contact portion that is relatively movable together with the cleaning shaft in accordance with the relative movement of the cleaning shaft with respect to the housing and contacts a portion of the cleaning element between a rear end portion of the cleaning shaft and the second bobbin, and a second contact portion that is relatively movable together with the housing in accordance with the relative movement of the cleaning shaft with respect to the housing and contacts a portion of the cleaning element between the first contact portion and the second bobbin.
[6] Aspect 6 of the present invention may be the optical connector cleaning tool of Aspect 2, wherein the optical connector cleaning tool may comprise a rotating body mounted to the second bobbin, and the collection mechanism may comprise: a pinion gear part included in the rotating body; and a rack gear that is relatively movable with respect to the rotating body in accordance with the relative movement of the cleaning shaft with respect to the housing and is engaged with the pinion gear part.
[7] Aspect 7 of the present invention may be the optical connector cleaning tool of Aspect 3, wherein the optical connector cleaning tool may comprise a rotating body mounted to the second bobbin, the rotation restriction mechanism may comprise: a third engagement part included in the rotating body and having a first sloping surface; and a fourth engagement part included in the second bobbin and having a second sloping surface corresponding to the first sloping surface, wherein the rotating body may idle with respect to the second bobbin by disengaging the third engagement part and the fourth engagement part when the tension equal to or more than the predetermined value is applied to the second bobbin via the cleaning element.

### Effects of Invention

According to the invention, since the locking mechanism locks the first bobbin when the relative position of the cleaning shaft with respect to the housing is displaced toward the first direction, and unlocks the first bobbin when the relative position of the cleaning shaft with respect to the housing is displaced toward the second direction, it is possible to increase the number of cleanable times of the optical connector by the optical connector cleaning tool.

### Brief Description of Drawings

FIG. 1 is a front view illustrating an optical connector as an object to be cleaned by an optical connector cleaning tool in an embodiment of the present invention.
FIG. 2 is a perspective view of the optical connector cleaning tool in the embodiment of the present invention.
FIG. 3 is an exploded perspective view of the optical connector cleaning tool in the embodiment of the present invention.
FIG. 4 is an exploded perspective view of a cleaning unit in the embodiment of the present invention.
FIG. 5(a) is a front view illustrating a front end portion of a cleaning head in the embodiment of the present invention, and FIG. 5(b) is a cross-sectional view taken along the line VB-VB in FIG. 5(a).
FIG. 6 is a perspective view of a rotation restriction mechanism in the embodiment of the present invention.
FIG. 7 is a perspective view illustrating a winding bobbin in the embodiment of the present invention.
FIG. 8 is a perspective view of a collection mechanism in the embodiment of the present invention.
FIG. 9 is a plan view illustrating a feed mechanism and a locking mechanism in the embodiment of the present invention.
FIG. 10 is a perspective view of a support body in the embodiment of the present invention.
FIG. 11 is a cross-sectional view taken along the line XI-XI of FIG. 10.
FIG. 12 is a perspective view illustrating an adjustment member in the embodiment of the present invention.
FIGS. 13(a) to 13(c) are figures illustrating an operation in the interior of the optical connector cleaning tool in the embodiment of the present invention. FIG. 13(a) illustrates a state before a pushing operation of a housing with respect to the cleaning unit, FIG. 13(b) illustrates a state in which the housing is pushed in with respect to the cleaning unit, and FIG. 13(c) illustrates a state after a release of the pushing operation of the housing.

### Mode(s) for Carrying out the Invention

Hereinafter, embodiments of the present invention will be described based on the drawings.

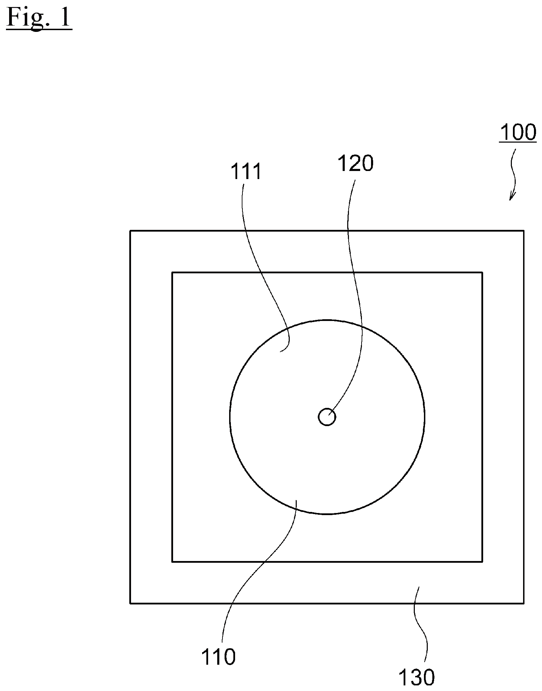

In the embodiment of the present invention, an optical connector cleaning tool 1 is a cleaner that cleans a connection end surface of an optical connector that connects optical fibers to each other. FIG. 1 is a front view illustrating an optical connector 100 as an object to be cleaned by the optical connector cleaning tool 1 in the embodiment.

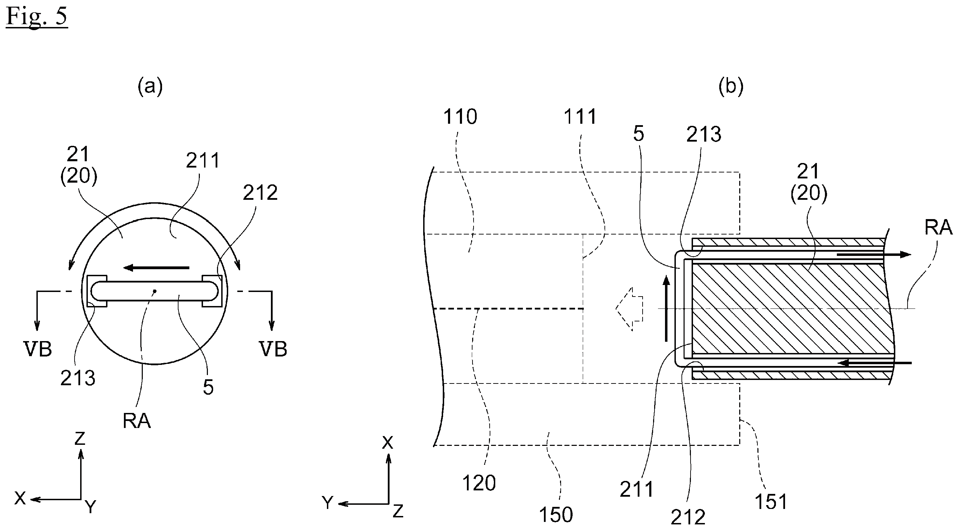

The optical connector 100, which is the object to be cleaned by the optical connector cleaning tool 1, is not particularly limited, but is a single-core connection type optical connector plug. As illustrated in FIG. 1, the optical connector 100 includes a ferrule 110 having a cylindrical shape and a housing 130 that houses the ferrule 110 in its interior. The ferrule 110 has a fiber holding hole that extends through the ferrule 110 in a longitudinal direction (see FIG. 5(b)). An optical fiber 120 is inserted into the fiber holding hole, and the optical fiber 120 is fixed to the ferrule 110 by an adhesive or the like. The optical fiber 120 is exposed from a circular connection end surface 111 of the ferrule 110.

Although not particularly limited thereto, the optical connector 100 may be a single-fiber optical connector such as a SC (Single-fiber Coupling) connector specified in JIS C 5973, a FC (Fiber Connector) connector specified in JIS C 5970, a MU (Miniature Universal) connector specified in JIS C 5983, or a LC (Lucent Connector) connector.

In the case in which a pair of optical connectors 100, each including the above-described ferrule 110, are connected, an adapter is used. Specifically, the pair of optical connectors 100 are inserted through the openings on both sides of the adapter, and the ferrules 110 are respectively inserted into the openings on both sides of a sleeve 150 (see FIG. 5(b)) included in the adapter. Then, by abutting the connection end surfaces 111 of the pair of ferrules 110 within the sleeve 150, the optical fibers 120 respectively exposed from the connection end surfaces 111 of the ferrules 110 are optically connected to each other.

If a contaminant such as dirt, dust, and oil is adhered to the connection end surface 111 of the ferrule 110 during the abutment, it may become a cause of a damage during a connection and a disconnection, an increase of a transmission loss, and the like. Therefore, before connecting the optical connectors 100 to each other, the connection end surface 111 of the ferrule 110 is cleaned using the optical connector cleaning tool 1 described below.

While the above-described optical connector 100 is an optical connector plug used in a plug-adapter-plug coupling system, the connection end surface of the ferrule of the optical connector receptacle used in the plug-receptacle coupling system may be cleaned using the optical connector cleaning tool 1 described below. Specifically, the optical connector receptacle includes a ferrule attached to the front end of the optical fiber and incorporated into a housing into which the optical connector plug is inserted.

Alternatively, a cap having an inner hole having the same shape as the inner hole of the adapter may be attached to the front end of the optical connector cleaning tool 1, and the optical connector plug may be inserted into the cap to clean the connection end surface of the optical connector plug alone in a state where the optical connector plug is not inserted into the adapter.

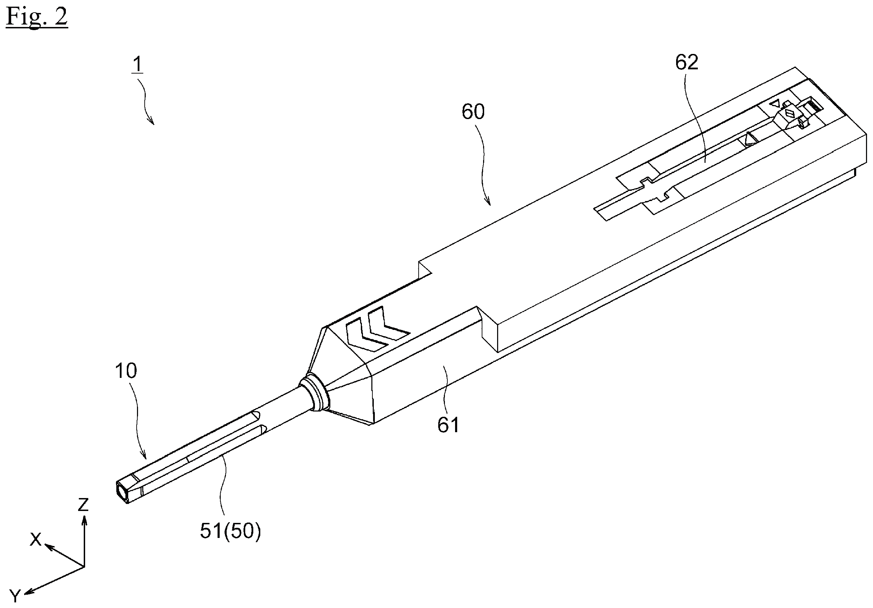

The configuration of the optical connector cleaning tool 1 in the present embodiment will be described in detail below with reference to FIGS. 2 to 8.

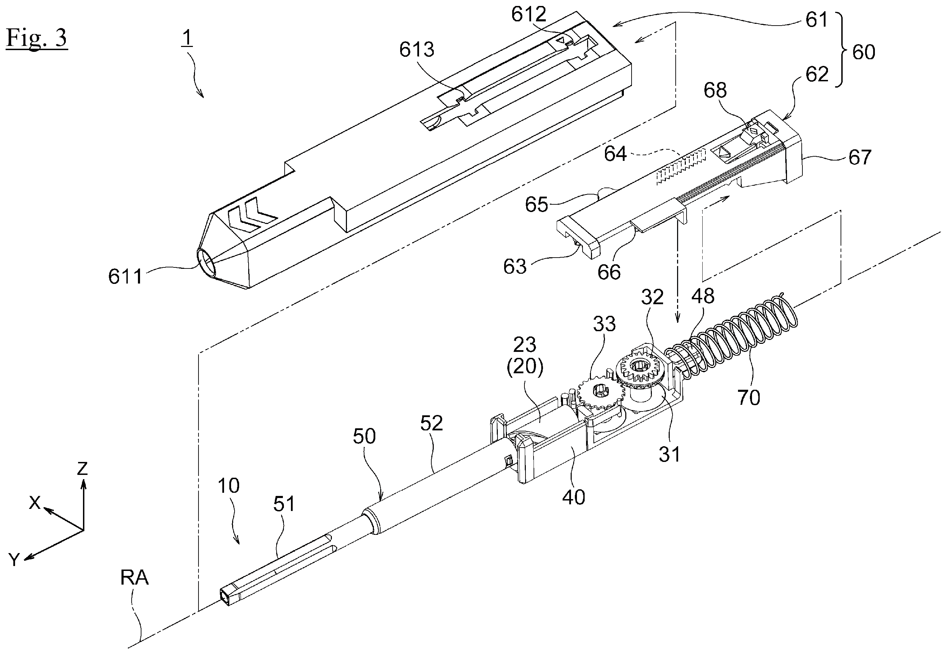

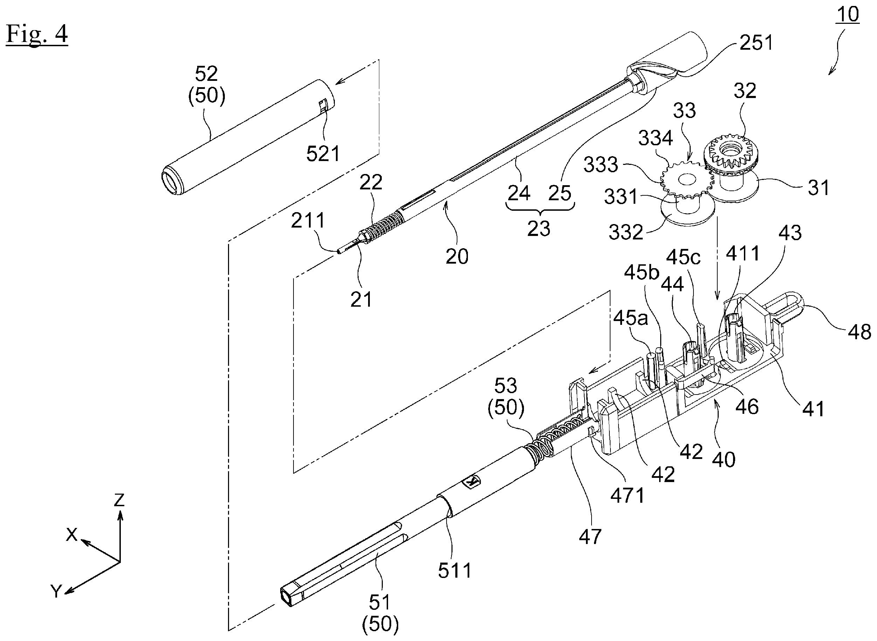

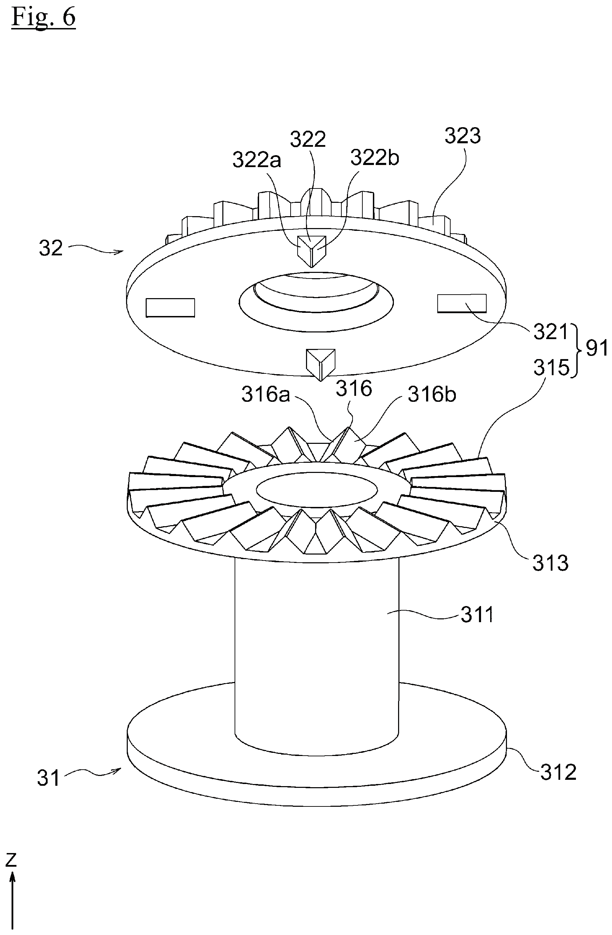

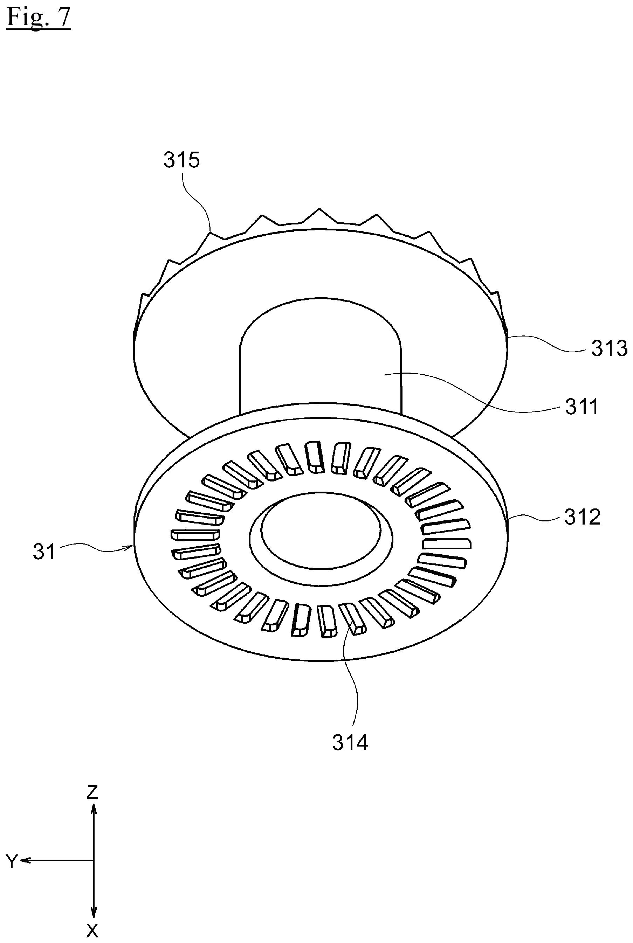

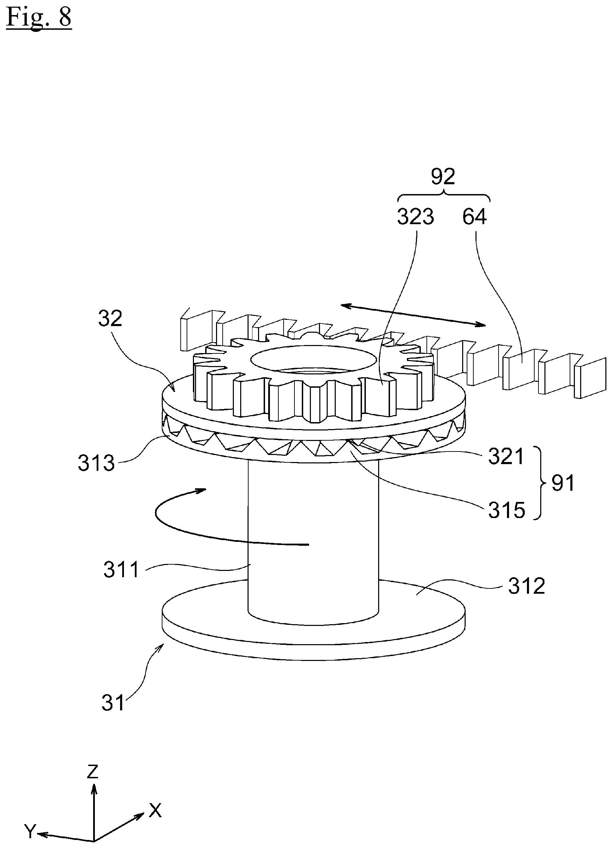

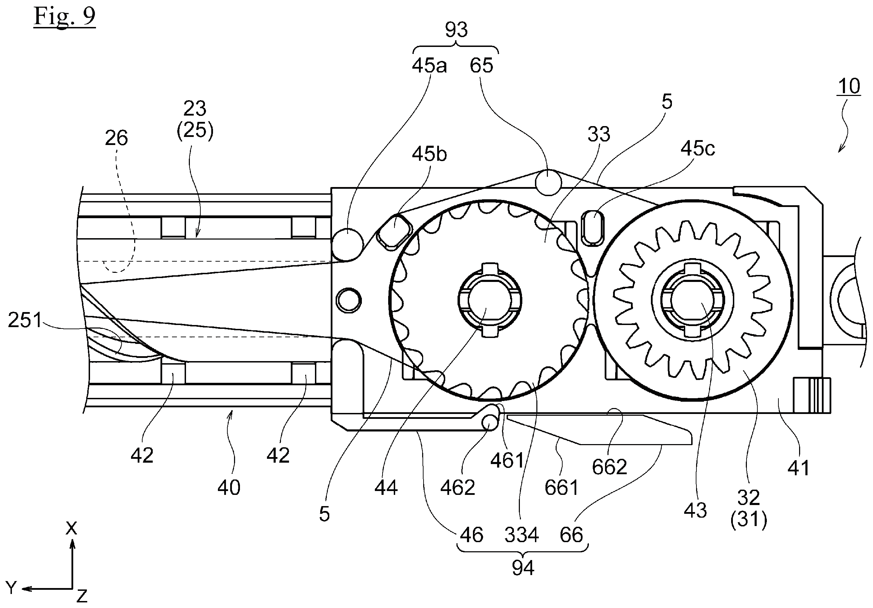

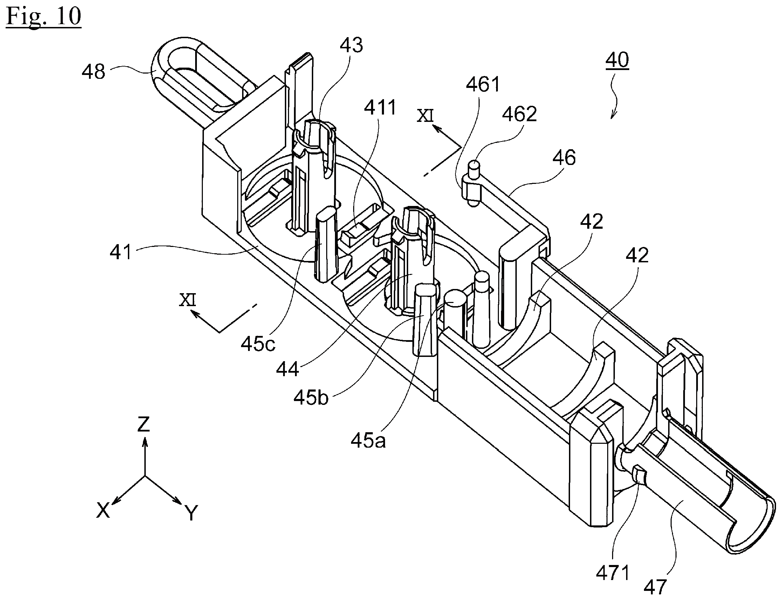

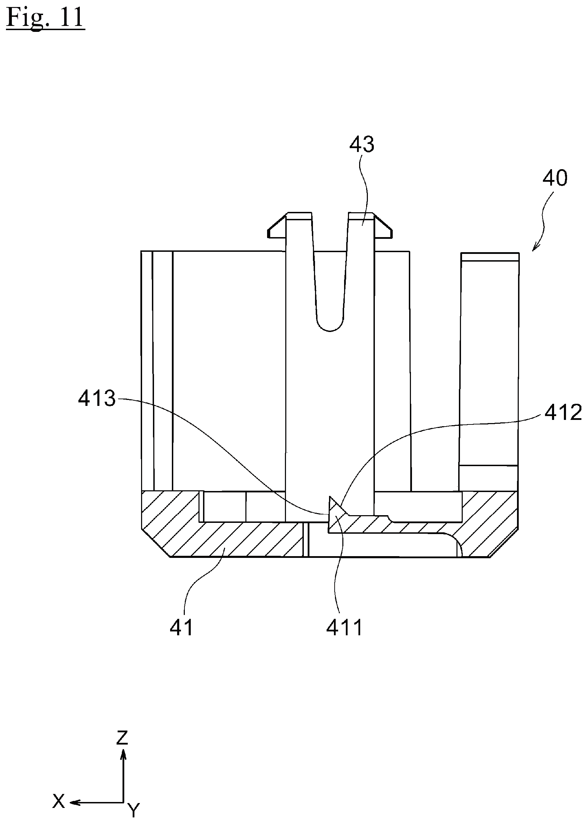

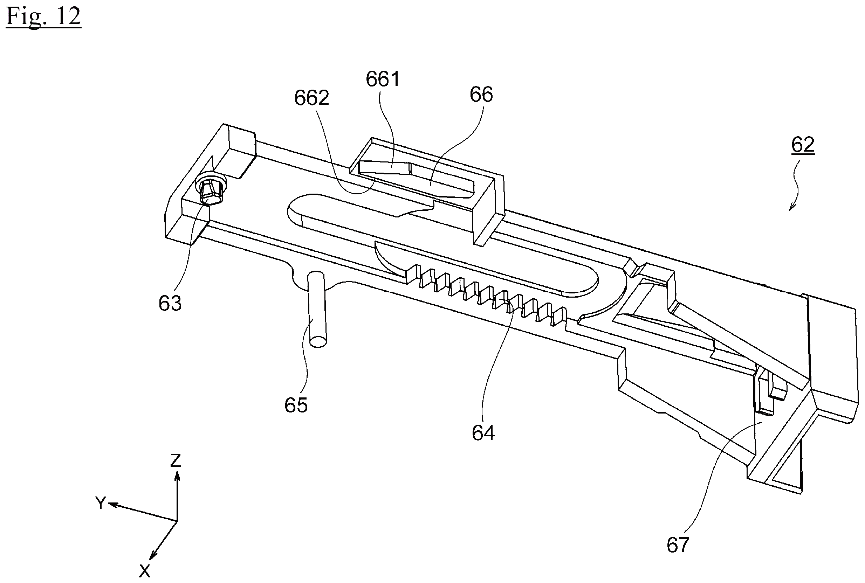

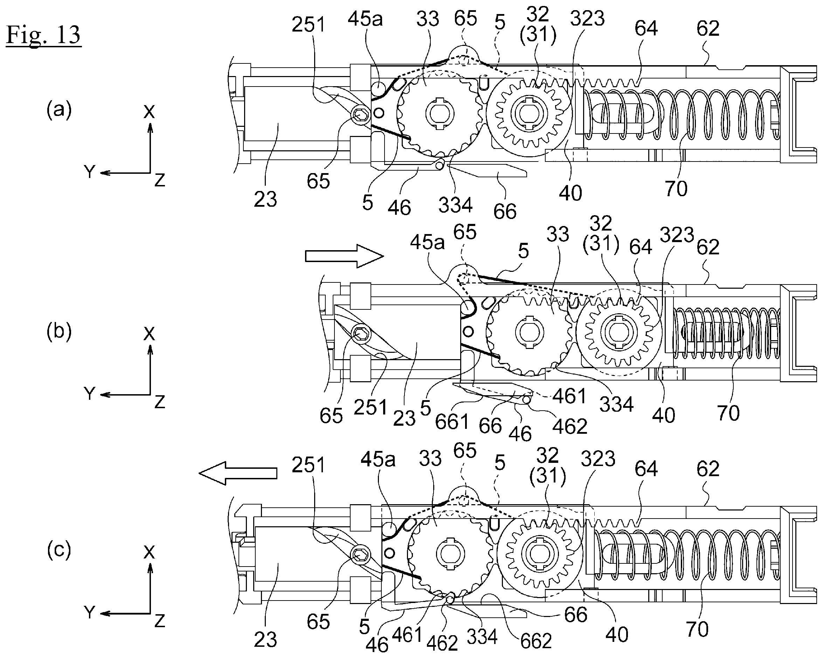

FIG. 2 is a perspective view of the optical connector cleaning tool 1 in the present embodiment, FIG. 3 is an exploded perspective view of the optical connector cleaning tool 1 in the present embodiment, and FIG. 4 is an exploded perspective view of a cleaning unit 10 in the present embodiment. FIG. 5(a) is a front view illustrating a front end portion of a cleaning head 21 in the embodiment, and FIG. 5(b) is a cross-sectional view taken along the line VB-VB in FIG. 5(a). FIG. 6 is a perspective view of a rotation restriction mechanism 91 in the present embodiment, FIG. 7 is a perspective view illustrating a winding bobbin 31 in the present embodiment, and FIG. 8 is a perspective view of a collection mechanism 92 in the present embodiment. FIG. 9 is a plan view illustrating a feed mechanism 93 and a locking mechanism 94 in the present embodiment. FIG. 10 is a perspective view of a support body 40 in the present embodiment, and FIG. 11 is a cross-sectional view taken along the line XI-XI of FIG. 10. FIG. 12 is a perspective view illustrating an adjustment member 62 in the embodiment of the present invention. FIGS. 13(a) to 13(c) are figures illustrating an operation in the interior of the optical connector cleaning tool 1 in the embodiment of the present invention.

The optical connector cleaning tool 1 (hereinafter simply referred to as a "cleaner 1") in the present embodiment includes the cleaning unit 10, a housing 60, and a first biasing member 70, as illustrated in FIGS. 2 to 4. The cleaning unit 10 is housed in the housing 60 such that the cleaning unit 10 is relatively movable with respect to the housing 60 along the Y-axis direction in the figure. The first biasing member 70 is interposed between the cleaning unit 10 and the housing 60, and biases the cleaning unit 10 toward the front side (in the +Y-direction in the figure). The cleaning unit 10 includes a cleaning shaft 20, the winding bobbin 31 that winds a cleaning element 5, a rotating body 32, a feeding bobbin 33 that feeds the cleaning element 5, the support body 40, and a guide nozzle 50. The cleaner 1 cleans the optical connector 100 by pressing the cleaning element 5, which is hung around the cleaning shaft 20, against the connection end surface 111 of the ferrule 110 of the optical connector 100 with a pressing surface 211 (described below) of the cleaning shaft 20.

The cleaning element 5 is a continuous body formed by processing a cleaning cloth into a threadlike or stringlike shape. Specific examples of the cleaning cloth may include a nonwoven fabric or a woven fabric composed of ultra-fine fibers such as polyester or nylon. In the present embodiment, the cleaning element 5 has a circular cross-sectional shape, but it is not particularly limited thereto, and the cross-sectional shape of the cleaning element 5 may be a polygonal shape. Although not particularly limited thereto, the cleaning element 5 has a diameter of 0.1 mm to 1 mm, and preferably has a diameter of 0.2 mm to 0.3 mm. The narrow tape-like continuous body formed by the processing of the cleaning cloth into a belt-like shape may be used as the cleaning element 5.

The cleaning shaft 20 is an elongated member configured to press the cleaning element 5 against the connection end surface 111 of the optical connector 100. The cleaning element 5 is held by the cleaning shaft 20 so that the cleaning element 5 is turned back at the pressing surface 211. The unused cleaning element 5 is wound around the feeding bobbin 33. The unused cleaning element 5 is fed to the cleaning shaft 20 from the feeding bobbin 33. Then, the cleaning element 5 used on the pressing surface 211 is collected to the winding bobbin 31. The cleaning shaft 20 includes the cleaning head (a head member) 21, a second biasing member 22, and a shaft member 23.

The cleaning head 21 is a member forming a front end portion of the cleaning shaft 20. As illustrated in FIGS. 5(a) and 5(b), the cleaning head 21 has, at a front end portion thereof, the pressing surface 211 that presses the cleaning element 5 against the connection end surface 111 of the optical connector 100. The pressing surface 211 has a shape (in the present embodiment, circular) corresponding to a shape of the connection end surface 111 of the ferrule 110 of the optical connector 100, which is the object to be cleaned.

A pair of guide holes 212, 213 are formed in the pressing surface 211 and allow the cleaning element 5 to pass through the interior of the cleaning shaft 20. The unused cleaning element 5 fed from the feeding bobbin 33 passes through an interior of the cleaning shaft 20 and one guide hole 212 and is fed to the pressing surface 211. The cleaning element 5 fed onto the pressing surface 211 passes over the center of the pressing surface 211 and moves on the pressing surface 211 toward the other guide hole 213. The used cleaning element 5 then passes through the other guide hole 213 and the interior of the cleaning shaft 20, and is wound around the winding bobbin 31 to be collected. Instead of the above-described guide holes 212, 213, a pair of guide grooves may be formed on the side surfaces of the cleaning head 21, and the cleaning element 5 may be fed to and collected from the pressing surface 211 through the guide grooves.

The shaft member 23 includes a shaft main body 24 and an expanded part 25, as illustrated in FIG. 4. Both the shaft main body 24 and the expanded part 25 have a cylindrical shape, and the expanded part 25 is connected to the rear end of the shaft main body 24. Although not particularly limited, for example, the shaft member 23 is made of a resin material, and the shaft main body 24 and the expanded part 25 are integrally formed.

The above-described cleaning head 21 is disposed on a front end side of the shaft main body 24. The cleaning head 21 is supported by the shaft main body 24 such that the cleaning head 21 is movable along the Y-axis direction in the figure with respect to the shaft main body 24. The Y-axis direction in the figure is an insertion/extraction direction of the cleaner 1 to/from the adapter during the cleaning operation, as well as the axis direction (the longitudinal direction) of the cleaning shaft 20, and the pressing direction in which the cleaning head 21 presses the pressing surface 211 via the cleaning element 5. Although not specifically illustrated in the figure, the cleaning shaft 20 includes the engagement structure that inhibits the relative rotation of the cleaning head 21 with respect to the shaft main body 24 about the rotation axis RA.

The second biasing member 22 is interposed between the cleaning head 21 and the shaft main body 24. The second biasing member 22 biases the cleaning head 21 forward (in the +Y-direction in the figure) with respect to the shaft main body 24, and the pressing surface 211 of the cleaning head 21 can press the cleaning element 5 against the connection end surface 111 of the optical connector 100 with an appropriate pressing force. Examples of the second biasing member 22 include an elastic body such as a spring or a rubber, and examples of the spring include a coil spring.

A spiral cam groove 251 is formed on the outer circumferential surface of the expanded part 25. The rotation mechanism that rotates the cleaning shaft 20 is implemented by the cam groove 251 and a cam pin 63 of the housing 60 described below. The rotation mechanism rotates the cleaning shaft 20 around the rotation axis RA parallel to the longitudinal direction of the cleaning shaft 20 as the center in accordance with the relative movement of the support body 40 with respect to the housing 60.

The shaft member 23 has a passageway 26 (see FIG. 9) in an interior thereof, which passes through the shaft member 23 along the longitudinal direction. The cleaning element 5 fed from the feeding bobbin 33 passes through the passageway 26 of the shaft member 23 and is fed to the pressing surface 211 of the cleaning head 21. Meanwhile, the cleaning element 5 collected from the pressing surface 211 of the cleaning head 21 passes through the passageway 26 of the shaft main body 24 and is wound around the winding bobbin 31.

The winding bobbin 31 is a bobbin that winds the cleaning element 5 used on the pressing surface 211 of the cleaning head 21 and is the bobbin that collects the cleaning element 5 from the pressing surface 211. The winding bobbin 31 corresponds to an example of the "second bobbin" in the aspect of the present invention. As illustrated in FIGS. 6 and 7, the winding bobbin 31 includes a body part 311 and a pair of flange parts 312, 313. The winding bobbin 31 is made of, for example, a resin material, and the body part 311 and the flange parts 312, 313 are integrally formed.

The used cleaning element 5 is wound around the body part 311. The body part 311 has a cylindrical shape, and a first shaft part 43 described below of the support body 40 is inserted therein. The pair of flange parts 312, 313 have a disc shape with an outer diameter larger than an outer diameter of the body part 311, and are provided at both of the ends of the body part 311.

As illustrated in FIG. 7, a plurality of recesses 314 are formed on an outer surface of the lower side (the -Z-direction side in the figure) flange part 312 of the winding bobbin 31. A plurality of the recesses 314 are intermittently disposed along a circumferential direction of the flange part 312. A claw part 411 (see FIG. 11) of the support body 40 described below is engageable with the recesses 314. The claw part 411 permits a rotation of the winding bobbin 31 in one direction (rightward (clockwise) in FIG. 9) and prohibits the rotation of the winding bobbin 31 in the other direction (leftward (counterclockwise) in FIG. 9).

As illustrated in FIG. 6, a gear part 315 is formed on an outer surface of an upper side (a +Z-direction side in the figure) flange part 313 of the winding bobbin 31. Each of teeth 316 constituting the gear part 315 has sloping surfaces 316a, 316b on both of the sides. The teeth 316 of the gear part 315 correspond to an example of the "fourth engaging part" in an aspect of the present invention, and the sloping surface 316a of the teeth 316 corresponds to an example of the "second sloping surface" in an aspect of the present invention.

The rotating body 32 is a gear member mounted to the winding bobbin 31. Specifically, the first shaft part 43 of the support body 40 inserted into an inner hole of the winding bobbin 31 is also inserted into an inner hole of the rotating body 32. Accordingly, the rotating body 32 is adjacent to an outer surface of the winding bobbin 31 and is disposed coaxially with the winding bobbin 31. The rotating body 32 includes a gear part 321 and a pinion gear part 323. The rotating body 32 is made of, for example, a resin material, and the gear part 321 and the pinion gear part 323 are integrally formed.

The gear part 321 is formed on the lower surface (a -Z-direction side surface in the figure) of the rotating body 32 so as to face the gear part 315 of the winding bobbin 31. Each of teeth 322 constituting the gear part 321 also has sloping surfaces 322a, 322b on both of the sides. The sloping surface 316a of the winding bobbin 31 is engaged with the sloping surface 322a of the rotating body 32, and the sloping surface 316b of the winding bobbin 31 is engaged with the sloping surface 322b of the rotating body 32. The teeth 322 of the gear part 321 corresponds to an example of the "third engagement part" in the aspect of the present invention, and the sloping surface 322a of the teeth 322 corresponds to an example of the "first sloping surface" in the aspect of the present invention.

In the case in which the force transmitted from the rotating body 32 to the winding bobbin 31 is less than the predetermined value when the rotating body 32 rotates in one direction (rightward (clockwise) in FIG. 9), the gear parts 315, 321 are engaged with each other, and the winding bobbin 31 rotates with the rotating body 32. In contrast, in the case in which the force transmitted from the rotating body 32 to the winding bobbin 31 is equal to or more than the predetermined value, the sloping surfaces 316a, 322a cause the teeth 322 of the rotating body 32 to ride over the teeth 316 of the winding bobbin 31, thereby the engagement of the gear parts 315, 321 is released.

That is, the rotation restriction mechanism 91 is implemented by the gear part 315 of the winding bobbin 31 and the gear part 321 of the rotating body 32. The rotation restriction mechanism 91 restricts the rotation of the winding bobbin 31 by causing the rotating body 32 to idle with respect to the winding bobbin 31 in the case in which the tension equal to or more than the predetermined value is applied to the winding bobbin 31 via the cleaning element 5.

Here, the "tension of the predetermined value" is the tension that is more than the tension with which the cleaning element 5 drawn out by the feed mechanism 93 described below is wound around the winding bobbin 31, and is smaller than the tension with which the rotation of the winding bobbin 31 rotates the feeding bobbin 33 to draw the cleaning element 5 out from the feeding bobbin 33. In the present embodiment, as described below, the feeding bobbin 33 is forcibly locked by the locking mechanism 94, thereby the upper limit of "the tension of the predetermined value" is increased and the design of the rotation restriction mechanism 91 is facilitated.

On the other hand, as described above, the claw part 411 of the support body 40 prevents the winding bobbin 31 from rotating in the other direction (leftward (counterclockwise) in FIG. 9). Accordingly, when the rotating body 32 rotates in the other direction (leftward (counterclockwise) in FIG. 9), the sloping surfaces 316b, 322b cause the teeth 322 of the rotating body 32 to ride over the teeth 316 of the winding bobbin 31, thereby the rotating body 32 idles with respect to the winding bobbin 31.

The pinion gear part 323 of the rotating body 32 is formed on an upper surface (the +Z-direction side surface in the figure) of the rotating body 32. As illustrated in FIG. 8, the rack gear part 64 of the housing 60 which will be described below is engaged with the pinion gear part 323. The collection mechanism 92 which rotates the winding bobbin 31 to collect the cleaning element 5 from the pressing surface 211 is implemented by the pinion gear part 323 and the rack gear part 64. The collection mechanism 92, in accordance with the relative movement of the cleaning shaft 20 with respect to the housing 60, rotationally drives the winding bobbin 31 to wind the cleaning element 5 around the winding bobbin 31, thereby the cleaning element 5 is collected from a pressing surface 221 onto the winding bobbin 31.

The feeding bobbin 33 is a bobbin that feeds the cleaning element 5 used on the pressing surface 211 of the cleaning head 21, and is the bobbin that feeds the cleaning element 5 to the pressing surface 211. The feeding bobbin 33 corresponds to an example of the "first bobbin" in the aspect of the present invention. As illustrated in FIG. 4, the feeding bobbin 33, similar to the winding bobbin 31 described above, includes a body 331 and a pair of flange parts 332, 333. The unused cleaning element 5 is wound around the body 331 of the feeding bobbin 33 in advance.

Also, although not particularly illustrated, a plurality of recesses are formed in an outer circumferential surface of a lower side (the -Z-direction side in the figure) flange part 332 of the feeding bobbin 33, similar to the recess 314 of the winding bobbin 31 described above. The plurality of recesses are arranged intermittently in a circumferential direction of the flange part 332. A claw part of the support body 40 described below is engageable with the recesses. The claw part allows the rotation of the feeding bobbin 33 in one direction (rightward (clockwise) in FIG. 9) while prohibiting the rotation of the feeding bobbin 33 in the other direction (leftward (counterclockwise) in FIG. 9).

As illustrated in FIG. 9, a ratchet gear part 334 is formed on a periphery of the upper side (the +Z-direction side in the figure) flange part 333 of the feeding bobbin 33. A claw part 461 of a cantilever 46 of the support body 40 described below is engageable with the ratchet gear part 334. In the case in which the claw part 461 of the cantilever 46 is engaged with the ratchet gear part 334, the rotation of the feeding bobbin 33 in one direction (rightward (clockwise) in FIG. 9) is prohibited. In contrast, in the case in which the claw part 461 is not engaged with the ratchet gear part 334, the rotation of the feeding bobbin 33 is allowed.

The support body 40 is a member that supports the cleaning shaft 20, the winding bobbin 31, the rotating body 32, and the feeding bobbin 33, as described above. As illustrated in FIG. 10, the support body 40 includes a base part 41, a support wall 42, shaft parts 43, 44, guide pins 45a to 45c, the cantilever 46, a tubular portion 47, and a convex part 48.

The support wall 42, the shaft parts 43, 44, and the guide pins 45a to 45c are supported by the base part 41. The cantilever 46 is supported on a sidewall of the support body 40 (the -X sidewall in the figure). The tubular portion 47 protrudes in the +Y-direction in the figure from a front end side (+Y-direction side in the figure) wall of the support body 40. The convex part 48 protrudes in the -Y-direction in the figure from a rear end side (the -Y-direction side in the figure) wall of the support body 40. The support body 40 is made of, for example, a resin material, and the base part 41, the support wall 42, the shaft parts 43, 44, the guide pins 45a to 45c, the cantilever 46, the tubular portion 47, and the convex part 48 are integrally formed.

As illustrated in FIGS. 3 and 4, the cleaning shaft 20 is supported by the support body 40 so as to be rotatable about the rotation axis RA. Specifically, as illustrated in FIG. 10, the plurality of the support walls 42 of the support body 40 have respective arc-shaped recesses corresponding to the outer circumferential surface of the expanded part 25 of the cleaning shaft 20. As the expanded part 25 is held in the recess of the support wall 42, the cleaning shaft 20 is rotatably supported by the support body 40. On the other hand, the shaft main body 24 of the cleaning shaft 20 protrudes, through the tubular portion 47 of the support body 40, from the support body 40 in the +Y-direction in the figure.

As illustrated in FIG. 9, the first shaft part 43 is inserted into an inner hole of the winding bobbin 31, and the winding bobbin 31 is rotatably supported by the support body 40. The first shaft part 43 is also inserted into an inner hole of the rotating body 32. The rotating body 32 is rotatably supported on the same axis as the winding bobbin 31 by the support body 40. The second shaft part 44 is inserted into an inner hole of the feeding bobbin 33, and the feeding bobbin 33 is rotatably supported by the support body 40. The cleaning element 5, having passed through the passageway 26 of the cleaning shaft 20 and entered the support body 40, is guided to the winding bobbin 31 by the plurality of guide pins 45a to 45c. The guide pin 45a is in contact with a portion of the cleaning element 5 between a rear end portion (the -Y end portion in the figure) of the cleaning shaft 20 and the winding bobbin 31, and the guide pin 45b is in contact with a portion of the cleaning element 5 between the guide pin 45a and the winding bobbin 31. In the state in which an amount of the cleaning element 5 wound around the winding bobbin 31 is low, the guide pin 45c contacts a portion of the cleaning element 5 between the guide pin 45b and the winding bobbin 31.

As illustrated in FIGS. 4 and 10, the base part 41 of the support body 40 has the claw part 411 at a position facing the winding bobbin 31. The claw part 411 is elastically deformable along the normal direction of the base part 41. The claw part 411 has a sloping surface 412 and a vertical surface 413 at the front end portion thereof, as illustrated in FIG. 11. As the sloping surface 412 allows the claw part 411 to disengage from the recess 314, the winding bobbin 31 can rotate in one direction (rightward (clockwise) in FIG. 9). In contrast, the claw part 411 cannot disengage from the recess 314 when the vertical surface 413 abuts against an inner wall surface of the recess 314, and therefore the winding bobbin 31 cannot rotate in the other direction (leftward (counterclockwise) in FIG. 9).

Although not specifically illustrated, the base part 41 of the support body 40 also includes, at a position facing the feeding bobbin 33, the claw part similar to the above-described claw part 411. The claw part and the recesses of the feeding bobbin 33 allow the feeding bobbin 33 to rotate in one direction (rightward (clockwise) in FIG. 9), but does not allow the feeding bobbin 33 to rotate in the other direction (leftward (counterclockwise) in FIG. 9).

The cantilever 46 is supported on a side wall (the -X side wall in the figure) of the support body 40 such that the cantilever 46 faces the upper side (the +Z-direction side in the figure) flange part 333 of the feeding bobbin 33 which is supported on the second shaft part 44 of the support body 40, as illustrated in FIGS. 9 and 10. The cantilever 46 is supported at one end by the side wall, and the free end of the cantilever 46 can move toward and away from the feeding bobbin 33 by the elastic deformation of the cantilever 46 itself.

The cantilever 46 includes the claw part 461 at the tip. When the cantilever 46 is in a normal state (a state in which the elastic deformation is absent), the claw part 461 is spaced apart from the ratchet gear part 334 of the feeding bobbin 33, and the rotation of the feeding bobbin 33 is allowed. On the other hand, when the cantilever 46 is elastically deformed so as to approach the feeding bobbin 33, the claw part 461 is engaged with the ratchet gear part 334 of the feeding bobbin 33, thereby the feeding bobbin 33 is locked.

The cantilever 46 includes a projection 462 that protrudes upward (toward the +Z-direction in the figure) from the claw part 461. The projection 462 functions as a cam follower guided by a cam part 66 of the adjustment member 62 described below. When the projection 462 is pressed toward the side of the feeding bobbin 33 by the cam part 66, the cantilever 46 is elastically deformed to approach the feeding bobbin 33. On the other hand, when pressing the projection 462 by the cam part 66 is released, the cantilever 46 separates from the feeding bobbin 33 by the elastic force thereof.

The guide nozzle 50 includes a first tubular body 51, a second tubular body 52, and a third biasing member 53, as illustrated in FIG. 3 and FIG. 4. The guide nozzle 50 is disposed on a front end side of the support body 40. The guide nozzle 50 is supported by the support body 40 such that the first tubular body 51 can move along the Y-axis direction in the figure with respect to the support body 40.

Both the first and second tubular bodies 51, 52 have tubular shapes. The first tubular body 51 has an outer diameter smaller than an inner diameter of the second tubular body 52 and is inserted in an interior of the second tubular body 52. The first tubular body 51 is inserted into the second tubular body 52 so as to be relatively movable along the Y-axis direction in the figure. A step portion 511 provided at the substantially central portion of the first tubular body 51 is engaged with a protrusion part (not illustrated) formed on an inner circumferential surface of a front end of an inner hole of the second tubular body 52, thereby the forward movement (the +Y-direction in the figure) of the first tubular body 51 is restricted.

The third biasing member 53 is inserted into the tubular portion 47 of the support body 40. A rear end side (the -Y-direction side in the figure) end portion of the third biasing member 53 is in contact with a front end side (the +Y-direction side in the figure) wall of the support body 40. On the other hand, a front end side (the +Y-direction side in the figure) end portion of the third biasing member 53 is in contact with a rear end side (the -Y-direction side in the figure) end portion of the first tubular body 51. That is, the third biasing member 53 is interposed between the first tubular body 51 and the support body 40. Examples of the third biasing member 53 include an elastic body such as a spring or a rubber, and examples of the spring include a coil spring.

The third biasing member 53 is inserted into the second tubular body 52 together with the first tubular body 51. The tubular portion 47 of the support body 40 is also inserted into the second tubular body 52. A projection 471 is formed on an outer circumferential surface of the tubular portion 47 of the support body 40, and a window portion 521 is formed on a rear end portion of an outer circumferential surface of the second tubular body 52. The projection 471 is inserted into the window portion 521, thereby the second tubular body 52 is fixed to the support body 40. In this state, the third biasing member 53 biases the first tubular body 51 toward the front (in the +Y-direction in the figure).

The portion of the cleaning shaft 20 that protrudes from the support body 40 is inserted into the guide nozzle 50. The portion of the cleaning shaft 20 that protrudes from the support body 40 is a portion of the cleaning shaft 20 that is on a more front end side (on the +Y-direction side in the figure) than the expanded part 25, specifically, the cleaning head 21, the second biasing member 22, and the shaft main body 24.

In the normal state (a state in which the cleaner 1 is not being used (a state in which the front end of the guide nozzle 50 is not inserted into the adapter)), a front end of the cleaning shaft 20 does not protrude from the guide nozzle 50 and is positioned inside the guide nozzle 50. When cleaning the optical connector 100 with the cleaner 1, the front end of the guide nozzle 50 is inserted into the adapter. When the front end of the guide nozzle 50 abuts an end face 151 of the sleeve 150 (see FIG. 5(b)), the first tubular body 51 relatively retracts with respect to the second tubular body 52, and the front end of the cleaning shaft 20 protrudes from the guide nozzle 50.

The housing 60 houses a portion of the cleaning unit 10 and the first biasing member 70. As illustrated in FIGS. 2 and 3, the housing 60 includes a housing main body 61 and the adjustment member 62. The housing main body 61 has two notches 612, 613, and an opening 611 is formed at a front end thereof. The cleaning unit 10 is housed within the housing main body 61 such that a front end portion of the cleaning unit 10 protrudes from the housing main body 61 through the opening 611. The cleaning unit 10 is housed in the housing main body 61 such that the cleaning unit 10 is relatively movable with respect to the housing main body 61 along the Y-axis direction in the figure.

As illustrated in FIG. 12, the adjustment member 62 includes the cam pin 63, the rack gear part 64, a movable pin 65, and the cam part 66. As illustrated in FIG. 3, the adjustment member 62 covers the support body 40 such that the cleaning unit 10 is relatively movable along the Y-axis direction in the figure with respect to the adjustment member 62.

The cam pin 63 of the adjustment member 62 is inserted into the cam groove 251 of the shaft member 23. Therefore, when the cleaning unit 10 relatively moves with respect to the housing 60, the cleaning shaft 20 rotates about the rotation axis RA by the rotation mechanism constituted by the cam pin 63 and the cam groove 251.

The rack gear part 64 of the adjustment member 62 is engaged with the pinion gear part 323 of the rotating body 32. Thus, upon the relative movement of the cleaning unit 10 with respect to the housing 60, the winding bobbin 31 is rotated by the collection mechanism 92 constituted by the rack gear part 64 and the pinion gear part 323.

As illustrated in FIG. 9, the movable pin 65 is in contact with the portion of the cleaning element 5 between the guide pin 45a of the support body 40 and the winding bobbin 31. The movable pin 65 is relatively movable with respect to the guide pin 45a of the support body 40 in accordance with the relative movement of the support body 40 with respect to the housing 60.

In the state in which the relative position of the support body 40 with respect to the housing 60 is on the front side (the +Y-direction side in the figure) (the state in which the first biasing member 70 is not compressed), as illustrated in FIG. 9 and FIG. 13(a), the movable pin 65 is positioned on a more rear end side (the -Y-direction side in the figure) than the guide pin 45a of the support body 40 in the axis direction (the Y-direction in the figure) of the optical connector cleaning tool 1. When the support body 40 relatively moves rearward (the -Y-direction in the figure) with respect to the housing 60, as illustrated in FIG. 13(b), the movable pin 65 moves on a more front side (on the +Y-direction side in the figure) than the guide pin 45a in the axis direction (the Y-direction in the figure) of the optical connector cleaning tool 1, thereby the cleaning element 5 is pulled out from the feeding bobbin 33 and the feeding bobbin 33 is rotated.

Thus, the feed mechanism 93, which draws the cleaning element 5 from the feeding bobbin 33 to the pressing surface 221 and feeds the cleaning element 5 from the feeding bobbin 33 to the pressing surface 221, is implemented by the movable pin 65 and the guide pin 45a. The feed mechanism 93 pulls the cleaning element 5 out to the pressing surface 221 and rotates the feeding bobbin 33 in accordance with the relative movement of the support body 40 with respect to the housing 60. The movable pin 65 corresponds to an example of the "second contact portion" in the aspect of the present invention, and the guide pin 45a corresponds to an example of the "first contact portion" in the aspect of the present invention.

The cam part 66 can move toward and away from the cantilever 46 of the support body 40 in accordance with the relative movement of the support body 40 with respect to the housing 60. The cam part 66 has an outer first cam surface 661 and an inner second cam surface 662.

As illustrated in FIG. 9 and FIG. 13(a), in the state in which the relative position of the support body 40 with respect to the housing 60 is on the front side (on the +Y-direction side in the figure) (in the state in which the first biasing member 70 is not compressed), the cam part 66 is spaced apart from the cantilever 46.

When the support body 40 relatively moves backward (in the -Y-direction in the figure) with respect to the housing 60, the projection 462 of the cantilever 46 rides up on the first cam surface 661 of the cam part 66, as illustrated in FIG. 13(b). This causes the cantilever 46 to elastically deform toward outside and to separate from the feeding bobbin 33. In this state, the claw part 461 of the cantilever 46 is disengaged from the ratchet gear part 334 of the feeding bobbin 33, and the locking of the feeding bobbin 33 is released.

Next, when the support body 40 relatively moves forward (in the +Y-direction in the figure) with respect to the housing 60, the projection 462 of the cantilever 46 is pressed by the second cam surface 662 of the cam part 66, as illustrated in FIG. 13(c). This causes the cantilever 46 to elastically deform toward inside and to approach the feeding bobbin 33. In this state, the claw part 461 is engaged with the ratchet gear part 334 of the feeding bobbin 33 to lock the feeding bobbin 33.

That is, the locking mechanism 94, which locks the feeding bobbin 33 or unlocks the feeding bobbin 33, is implemented by the cam part 66, the cantilever 46 of the support body 40, and the ratchet gear part 334 of the feeding bobbin 33. In other words, the locking mechanism 94 either prohibits the rotation of the feeding bobbin 33, or releases the prohibition (permits the rotation of the feeding bobbin 33). The locking mechanism 94 locks the rotation of the feeding bobbin 33 when the relative position of the support body 40 with respect to the housing 60 is displaced toward the first direction (the +Y-direction in the figure), and unlocks the rotation of the feeding bobbin 33 when the relative position of the support body 40 with respect to the housing 60 is displaced toward the second direction (the -Y-direction in the figure). The cam part 66 corresponds to an example of the "guide member" in the aspect of the present invention, the cantilever 46 of the support body 40 corresponds to an example of the "first engagement part" in the aspect of the present invention, and the ratchet gear part 334 of the feeding bobbin 33 corresponds to an example of the "second engagement part" in the aspect of the present invention.

The first biasing member 70 is inserted into the convex part 48 of the support body 40, as illustrated in FIG. 3, and is interposed between a rear end side (the -Y-direction side in the figure) wall of the support body 40 and a rear end side wall 67 of the adjustment member 62. The first biasing member 70 biases the cleaning unit 10 toward the front end (in the +Y-direction in the figure). Examples of the first biasing member 70 include an elastic body such as a spring or a rubber, and examples of the spring include a coil spring.

The adjustment member 62 and the first biasing member 70 are housed within the housing main body 61 together with the cleaning unit 10. The adjustment member 62 is fixed to the housing main body 61 by engagement of an engagement piece 68 of the adjustment member 62 with the notch 612 of the housing main body 61.

The cleaning unit 10 can be advanced with respect to the housing main body 61 by advancing the adjustment member 62 with respect to the housing main body 61 and engaging the engagement piece 68 with another of the notches 613. That is, a protrusion amount of the cleaning unit 10 from the housing main body 61 can be adjusted by engaging the engagement piece 68 with either the notch 612 or the notch 613. The adjustment of the protrusion amount of the cleaning unit 10 is performed before the cleaning operation of the optical connector 100, and the adjustment member 62 is not moved with respect to the housing main body 61 during the cleaning operation of the optical connector 100.

The internal operation of the cleaner 1 during the cleaning operation on the connection end surface 111 of the optical connector 100, performed using the above-described cleaner 1, will be described.

First, an operator inserts the front end portion of the guide nozzle 50 of the cleaner 1 into the opening of the adapter. Therefore, the front end of the guide nozzle 50 abuts against the end face 151 of the sleeve 150. When the operator pushes the cleaner 1 toward the adapter, the third biasing member 53 contracts, the first tubular body 51 retracts with respect to the second tubular body 52, and the cleaning head 21 of the cleaning shaft 20 protrudes from the front end of the guide nozzle 50. The cleaning head 21 then enters the sleeve 150 (see FIG. 5(b)), and the cleaning head 21 brings the cleaning element 5 into contact with the connection end surface 111 of the optical connector 100.

Next, when the operator pushes the housing 60 against the guide nozzle 50 toward the +Y-direction in the figure, the cleaning unit 10 relatively retracts with respect to the housing 60, the first biasing member 70 contracts and the second biasing member 22 also contracts. The contraction of the second biasing member 22 causes the cleaning head 21 to press the cleaning element 5 against the connection end surface 111 of the ferrule 110 with the appropriate pressing force.

As illustrated in FIGS. 13(a) and 13(b), the pushing operation by the operator causes the movable pin 65 to move to a position forward (the +Y-direction side in the figure) of the guide pin 45a of the support body 40, thereby the cleaning element 5is pulled out, the feeding bobbin 33 is rotated in one direction (rightward (clockwise) in FIG. 9), and the cleaning element 5 is fed from the feeding bobbin 33 to the pressing surface 211. Therefore, the cleaning element 5 slides while being pressed against the connection end surface 111 of the optical connector 100, and the contaminant adhering to the connection end surface 111 is wiped. The feed mechanism 93 implemented by the movable pin 65 and the guide pin 45a can feed a fixed amount of the cleaning element 5 from the feeding bobbin 33 to the pressing surface 211 for each pushing operation.

At this time, the projection 462 of the cantilever 46 rides up onto the first cam surface 661 of the cam part 66, and the cantilever 46 elastically deforms outward and separates from the feeding bobbin 33. Therefore, the claw part 461 is spaced apart from the ratchet gear part 334 of the feeding bobbin 33, and the rotation of the feeding bobbin 33 is permitted.

When the cleaning unit 10 is respectively retracted with respect to the housing 60, the cam pin 63 relatively slide within the cam groove 251, and the cleaning shaft 20 rotates about the rotation axis RA. Therefore, even when the width of the thread-like or string-like cleaning element 5 is narrower than the connection end surface 111 to be cleaned, the contaminant can be wiped off from the entire area of the connection end surface 111. Although not particularly limited, the rotational angle of the cleaning shaft 20 is preferably 180° or more.

As described above, the claw part 411 of the support body 40 prohibits the winding bobbin 31 from rotating in the other direction (leftward (counterclockwise) in FIG. 9), and the gear parts 315, 321 of the winding bobbin 31 and the rotating body 32 have the sloping surfaces 316b, 322b. Therefore, even when the cleaning unit 10 is relatively retracted with respect to the housing 60 by the operator's pushing operation, the rotating body 32 idle with respect to the winding bobbin 31, and the winding bobbin 31 does not rotate.

Next, when the operator releases the pushing operation of the housing 60 against the guide nozzle 50, as illustrated in FIG. 13(c), the cleaning unit 10 relatively advances with respect to the housing 60 by the elastic force of the first biasing member 70. The linear motion of the cleaning unit 10 with respect to the housing 60 is converted into the rotational motion of the rotating body 32 by the rack gear part 64 and the pinion gear part 323. The gear parts 321, 315 of the rotating body 32 and the winding bobbin 31 are then engaged with each other, and the rotation of the rotating body 32 is transmitted to the winding bobbin 31. Therefore, the winding bobbin 31 is rotationally driven, and the fixed amount of the cleaning element 5 drawn by the feed mechanism 93 is wound around the winding bobbin 31, and the cleaning element 5 is collected onto the winding bobbin 31.

During this time, as described above, the rotation restriction mechanism 91 (the gear part 315 of the winding bobbin 31 and the gear part 321 of the rotating body 32) causes the rotating body 32 to idle with respect to the winding bobbin 31 when the tension equal to or more than the predetermined value is applied to the winding bobbin 31 via the cleaning element 5. Thus, even when the radius of the cleaning element 5 wound around the winding bobbin 31 increases as the number of the cleanings increases, the situation in which a larger amount of the cleaning element 5 than the fixed amount drawn by the above-described feed mechanism 93 is pulled out from the feeding bobbin 33 by the rotation of the winding bobbin 31 is suppressed.

When the cleaning unit 10 relatively advances with respect to the housing 60, the projection 462 of the cantilever 46 is pressed by the second cam surface 662 of the cam part 66, and the cantilever 46 elastically deforms toward the inner side and approaches the feeding bobbin 33. Therefore, since the claw part 461 is engaged with the ratchet gear part 334 of the feeding bobbin 33 and the feeding bobbin 33 is forcibly locked, the reliability of preventing the cleaning element 5 from being pulled out from the feeding bobbin 33 due to the rotation of the winding bobbin 31 is enhanced.

When the cleaning is finished, the operator removes the cleaner 1 from the optical connector 100 by pulling out the front end portion of the guide nozzle 50 of the cleaner 1 from the optical connector 100.

As described above, in the present embodiment, the locking mechanism 94 locks the feeding bobbin 33 when the relative position of the cleaning shaft 20 with respect to the housing 60 is displaced toward the first direction (the +Y-direction in the figure), and unlocks the feeding bobbin 33 when the relative position of the cleaning shaft 20 with respect to the housing 60 is displaced toward the second direction (the -Y-direction in the figure). Accordingly, since it is possible to prevent the cleaning body 5 from being drawn by more than the fixed amount due to the rotation of the winding bobbin 31, it is possible to increase in the number of cleanable times of the optical connector 100 by the optical connector cleaning tool 1.

It should be noted that the embodiment described above are described to facilitate understanding of the present disclosure and are not described to limit the present disclosure. It is therefore intended that the elements disclosed in the above embodiment include all design modifications and equivalents to fall within the technical scope of the present disclosure.

Although not specifically illustrated, the cantilever 46 may be inclined inward such that the claw part 461 may be kept constantly engaged with the ratchet gear part 334 in the state in which the relative position of the support body 40 with respect to the housing 60 is on the front side (the +Y-direction side in the figure) (the state in which the first biasing member 70 is not compressed). The engagement between the claw part 461 of the cantilever 46 and the ratchet gear part 334 of the feeding bobbin 33 may be released only at the time when the projection 462 of the cantilever 46 rides up onto the first cam surface 661 of the cam part 66. Therefore, it is possible to suppress unnecessarily drawing the cleaning element 5 from the feeding bobbin 33 due to unintended tension applied to the feeding bobbin 33 through the cleaning element 5 when the locking of the rotation of the feeding bobbin 33 is released.

### Description of Reference Numerals

1 Optical connector cleaning tool
5 Cleaning element
10 Cleaning unit
20 Cleaning shaft
21 Cleaning head
211 Pressing surface
212, 213 Guide holes
22 Second biasing member
23 Shaft member
24 Shaft main body
25 Expanded part
251 Cam groove
26 Passageway
31 Winding bobbin
311 Body part
312, 313 Flange parts
314 Recess
315 Gear part
316 Teeth
316a, 316b Sloping surfaces
32 Rotating body
321 Gear part
322 Teeth
322a, 322b Sloping surfaces
323 Pinion gear part
33 Feeding bobbin
331 Body
332, 333 Flange parts
334 Ratchet gear part
40 Support body
41 Base part
411 Claw part
412 Sloping surface
413 Vertical surface
42 Support wall
43 First shaft part
44 Second shaft part
45a to 45c Guide pins
46 Cantilever
461 Claw part
462 Projection
47 Tubular portion
471 Projection
48 Convex part
50 Guide nozzle
51 First tubular body
511 Step portion
52 Second tubular body
521 Window part
53 Third biasing member
60 Housing
61 Housing main body
611 Opening
612, 613 Notches
62 Adjustment member
63 Cam pin
64 Rack gear part
65 Movable pin
66 Cam part
661 First cam surface
662 Second cam surface
67 Rear end side wall
68 Engagement piece
70 First biasing member
91 Rotation restriction mechanism
92 Collection mechanism
93 Feed mechanism
94 Locking mechanism
100 Optical connector
110 Ferrule
111 Connection end surface
120 Optical fiber
130 Housing
131 Opening
150 Sleeve
151 End face

## Claims

1. An optical connector cleaning tool that cleans a connection end surface of an optical connector, comprising:
a cleaning shaft that comprises a pressing surface pressing a cleaning element against the connection end surface and in which the cleaning element is wound on the pressing surface;
a housing that holds the cleaning shaft relatively movable along an axis direction of the cleaning shaft;
a first bobbin that is housed in the housing and feeds the cleaning element to the pressing surface;
a second bobbin that is housed in the housing and collects the cleaning element from the pressing surface; and
a locking mechanism that locks the first bobbin when a relative position of the cleaning shaft with respect to the housing is displaced toward a first direction and unlocks the first bobbin when the relative position of the cleaning shaft with respect to the housing is displaced toward a second direction opposite to the first direction.

2. The optical connector cleaning tool according to claim 1, wherein
the optical connector cleaning tool comprises:
a feed mechanism that feeds the cleaning element from the first bobbin to the pressing surface in accordance with the relative movement of the cleaning shaft with respect to the housing toward the second direction; and
a collection mechanism that rotates the second bobbin to collect the cleaning element from the pressing surface in accordance with the relative movement of the cleaning shaft with respect to the housing toward the first direction.

3. The optical connector cleaning tool according to claim 1 or 2, further comprising a rotation restriction mechanism that restricts rotation of the second bobbin when a tension equal to or more than a predetermined value is applied to the second bobbin via the cleaning element.

4. The optical connector cleaning tool according to any one of claims 1 to 3, wherein
the locking mechanism comprises:
a first engagement part capable of moving toward and away from the first bobbin;
a second engagement part included in the first bobbin, the first engagement part capable of being engaged with the second engagement part; and
a guide member that is relatively movable with respect to the first engagement part in accordance with the relative position of the cleaning shaft with respect to the housing,
when the relative position of the cleaning shaft with respect to the housing is displaced toward the first direction, the first engagement part is engaged with the second engagement part, and
when the relative position of the cleaning shaft with respect to the housing is displaced toward the second direction, the first engagement part moves away from the first bobbin while the first engagement part is guided by the guide member.

5. The optical connector cleaning tool according to claim 2, wherein
the cleaning shaft has a passageway through which the cleaning element to be collected from the pressing surface to the second bobbin passes, and
the feed mechanism comprises:
a first contact portion that is relatively movable together with the cleaning shaft in accordance with the relative movement of the cleaning shaft with respect to the housing and contacts a portion of the cleaning element between a rear end portion of the cleaning shaft and the second bobbin, and
a second contact portion that is relatively movable together with the housing in accordance with the relative movement of the cleaning shaft with respect to the housing and contacts a portion of the cleaning element between the first contact portion and the second bobbin.

6. The optical connector cleaning tool according to claim 2, further comprising a rotating body mounted to the second bobbin, wherein
the collection mechanism comprises:
a pinion gear part included in the rotating body; and
a rack gear that is relatively movable with respect to the rotating body in accordance with the relative movement of the cleaning shaft with respect to the housing and is engaged with the pinion gear part.

7. The optical connector cleaning tool according to claim 3, further comprising a rotating body mounted to the second bobbin, wherein
the rotation restriction mechanism comprises:
a third engagement part included in the rotating body and having a first sloping surface; and
a fourth engagement part included in the second bobbin and having a second sloping surface corresponding to the first sloping surface, wherein
the rotating body idles with respect to the second bobbin by disengaging the third engagement part and the fourth engagement part when the tension equal to or more than the predetermined value is applied to the second bobbin via the cleaning element.
